# EUROPÄISCHE PATENTSCHRIFT

(11) **EP 1 307 366 B1**
(45) Veröffentlichungstag und Bekanntmachung des Hinweises auf die Patenterteilung: **06.09.2006**
(21) Anmeldenummer: 01951374.6
(22) Anmeldetag: 12.06.2001
(51) Int. Cl.: B60S 1/38, B60S 1/02

(54) **VERFAHREN UND VORRICHTUNG ZUM REINIGEN VON FAHRZEUGSCHEIBEN**
METHOD AND DEVICE FOR CLEANING VEHICLE PANES
PROCEDE ET DISPOSITIF POUR NETTOYER LES VITRES D'UN VEHICULE

(30) Priorität: 08.07.2000 DE 10033382
(43) Veröffentlichungstag der Anmeldung: 07.05.2003
(73) Patentinhaber: ROBERT BOSCH GMBH, 70442 Stuttgart (DE)
(72) Erfinder: SCHMID, Ralf, 87662 Kaltental (DE)
(86) Internationale Anmeldenummer: PCT/DE2001/002176
(87) Internationale Veröffentlichungsnummer: WO 2002/004264

(56) Entgegenhaltungen:
- EP-A- 0 334 651
- EP-A- 0 930 207
- US-A- 4 180 886

## Beschreibung

### Stand der Technik

Die Erfindung geht von einem Verfahren zum Reinigen von Fahrzeugscheiben nach dem Oberbegriff des Anspruchs 1 aus sie betrifft auch eine Vorrichtung zum durchführen eines derartigen Verfahrens, die ähnlich jener z.B. nach der US-A-4, 180, 886, ist.

Bekannte Scheibenwischer besitzen einen Wischarm, der aus einem Befestigungsteil und einem über ein Abklappgelenk daran angelenkten Gelenkteil mit einer Wischstange aufgebaut ist. Ein hakenförmiges Ende der Wischstange greift in einen Einhängekasten eines Wischblatts und umfasst einen Gelenkbolzen. Das so gebildete Gelenk führt das Wischblatt während der Schwenkbewegung über die Fahrzeugscheibe. Das Wischblatt besitzt ein in der Regel mehrgliederiges Tragbügelsystern mit an dem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, dass sich beim Wischen die Wischleiste mit einem gleichmäßigen Auflagedruck einer gebogenen Windschutzscheibe anpasst. Zu diesem Zweck spannt eine Zugfeder das Abklappgelenk vor. Scheibenwischer werden zum Reinigen von Windschutzscheiben, Heckscheiben und Scheiben an Beleuchtungseinrichtungen des Fahrzeugs verwendet. Solche Scheibenwischer sind z.B. aus der DE 37 44 237 A1 bekannt.

Aus der DE 197 38 232 A1 ist ferner ein gelenkloses Wischblatt bekannt, das ein vorzugsweise aus thermoplastischem Kunststoff hergestelltes Tragelement besitzt. Der elastische Träger ist lang gestreckt und in der Mitte an einer am Wischarm angeformten Wischstange angelenkt. An der zur Fahrzeugscheibe weisenden Seite besitzt der Träger eine Verbindungsfläche, an der der Profilrücken einer Wischleiste vorzugsweise durch Kleben befestigt ist.

In Verbindung mit Scheibenwischern werden in der Regel Scheibenwaschanlagen für Fahrzeuge verwendet. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigesetzt sind, mit Druck aus dem Wasserbehälter zu den Spritzdüsen fördert. Durch das Wasser und das Reinigungsmittel werden Schmutz- und Insektenrückstände auf der Scheibe angelöst und bei der Wischbewegung des Scheibenwischers beseitigt. Oft reicht jedoch die Zeit zwischen den Wischbewegungen nicht aus, um die Rückstände völlig zu lösen, so dass sich auf der Fahrzeugscheibe ein Schmutzfilm bildet, der die Sicht des Fahrers für eine längere Zeit beeinträchtigt.

Aus der DE 198 15 171 A1 ist es bereits bekannt, Spritzdüsen als zusätzliche Bauteile am Wischblatt zu befestigen und somit das Spritzwasser direkt mit kurzer Strahllänge auf den Wischbereich zu verteilen. Da das Spritzwasser auf einen Bereich in der Nähe des Wischblatts konzentriert ist und durch die Wischbewegung in kürzester Zeit wieder abgewischt wird, ist die Sicht durch das aufgebrachte Spritzwasser nur kurzzeitig behindert, jedoch ist auch die Zeit zum Lösen der Schmutzrückstände relativ kurz, sodass sich ein lästiger Schmutzfilm bilden kann.

Aus der EP-A-0 334 651 ist der Einsatz von piezokeramischen Werkstoffen zur Verbesserung der Reinigungswirkung bei einem Scheibenwischer bekannt. Dabei werden mit einem piezokeramischen Element höherfrequente periodische Anregungen des Wischblattes erzeugt, um das so genannte Wischblattrattern zu vermeiden. Hierbei wird die Frequenz so hoch gewählt, dass eine Wiederholung der Bedingungen für den Stick-Slipeffekt und damit das Rattern vermieden wird. Zu diesem Zweck ist ein piezokeramischer Oszillator direkt auf dem Wischarm oder auf dem Wischblatt angebracht. Oszillationen des Wischblattes in Bewegungsrichtung induzieren den Rutschzustand, während Schwingungen senkrecht zur Scheibe den Anpressdruck des Wischblatts periodisch variieren und somit das Haften des Wischblattes an der Scheibe vermindern.

Aus der EP-A-0 930 207 ist ein Scheibenwischer mit piezokeramischen Aktuatoren bekannt, die am Wischblatt und/oder am Wischarm angeordnet sind. Mit einer elektrischen Steuervorrichtung werden die Aktuatoren angesteuert, wodurch eine Änderung der Form des Wischblatts und/oder des Wischarms erreicht werden kann, sodass die Anpresscharakteristik des Wischblatts auf die Scheibe dem jeweiligen Betriebszustand des Scheibenwischers oder dem Profil der Fahrzeugscheibe angepasst wird. Gleichzeitig gestattet ein direkt am Wischblatt angebrachter Piezoaktuator die Erregung höherfrequenter Schwingungen mit einer Frequenz > 20 Hz zur Vermeidung von Wischblattrattern und zur Erhöhung der Wischqualität.

Aus der US-A-4 180 886 ist eine Vorrichtung zum Reinigen einer Windschutzscheibe eines Kraftfahrzeugs mit einer Wischgummianordnung bekannt, die im wesentlich zwei parallel zu einander verlaufende Wischgummiabschnitte aufweist, die an ihren Enden ein gestrecktes Oval bildend, miteinander verbunden sind. Mit der Kammer, die durch die durchlaufende Wischgummianordnung und die zu reinigende Windschutzscheibe begrenzt ist, steht ein Ultraschallgenerator in Verbindung. Wenn die Zufuhr zur Reinigungsflüssigkeit eingeschaltet wird, bildet sich in der Kammer eine Wassersäule, in der durch den Ultraschallgenerator Ultraschallwellen erzeugt werden. Hierdurch wird eine gute Schmutzablösung von der Scheibenoberfläche erzielt.

### Vorteile der Erfindung

Nach der Erfindung wird die Wischleiste mit einem zeitlichen Vorlauf zur Wischbewegung in Schwingungen versetzt. Die Frequenz der Schwingungen liegt zweckmäßigerweise im Ultraschallbereich, vorzugsweise über 30 kHz, wobei die Schwingungen in vorteilhafter Weise durch Piezoelemente erzeugt werden. Dazu sind mehrere Piezoelemente parallel zu einer Wischleiste angeordnet, und zwar so, dass sie sich quer zur Längsrichtung der Wischleiste ausdehnen und die erzeugten Druckimpulse auf die Wischleiste wirken. Die Steuerung ist so ausgelegt, dass die Piezoelemente mit einem zeitlichen Vorlauf zur Wischbewegung in Schwingung versetzt werden, insbesondere um Rückstände zu lösen oder die Wischlippe bei Vereisung von der Fahrzeugscheibe zu lösen. Durch die Mikrobewegung der Wischleiste platzt das Eis vom Wischgummi ab und die Wischlippe wird ohne Beschädigung wieder frei. Hierbei kann es zweckmä-ßig sein, dass die Piezoelemente nur im Bedarfsfall in Schwingung versetzt werden, z.B. beim ersten Betätigen des Scheibenwischers nach einem Stillstand des Fahrzeugs und/oder bei Außentemperaturen unter dem Gefrierpunkt.

Bei der Wischbewegung wird der Makrobewegung des Scheibenwischers eine Mikrobewegung der Wischleiste überlagert, die die Fahrzeugscheibe zusätzlich mechanisch intensiv reinigt. Dadurch können die Rückstände auf der Fahrzeugscheibe meistens bereits mit einem einzigen Wischvorgang beseitigt werden und die Sicht des Fahrers ist nur minimal behindert, insbesondere wenn gemäß einer Ausgestaltung der Erfindung während des Wischvorgangs etwas Waschwasser nahe der Wischleiste auf die Fahrzeugscheibe aufgebracht wird. Infolge der guten Reinigungswirkung wird der Verbrauch an Waschwasser und dem eventuell zugesetzten Reinigungsmittel bzw. Antigefriermittel stark reduziert. Durch den geringeren Waschwasserverbrauch kann außerdem der Wasserbehälter im Motorraum verkleinert werden, wodurch Raum für andere Komponenten gewonnen und Gewicht eingespart wird.

Zweckmäßigerweise werden die Piezoelemente durch eine elektronische Steuereinheit angesteuert, die gleichzeitig weitere Signale betreffend den Scheibenwischer verarbeiten kann. Die Steuereinheit kombiniert sinnvollerweise den Betrieb der Piezoelemente mit dem Einschalten der Waschanlage, sodass beide Funktionen gemeinsam wirken. Demnach wird beim Aktivieren der Piezoelemente gleichzeitig Waschwasser nahe der Wischleiste auf die Fahrzeugscheibe aufgebracht, welches während des Wischvorgangs durch die schwingende Wischleiste abgewischt wird. Das mechanische Lösen angetrockneter Schmutzteilchen unter Verwendung von Waschwasser verhindert, dass die Fahrzeugscheibe zerkratzt wird.

Die Piezoelemente und deren elektrische Kontaktstellen sind vorzugsweise in einem Wischgummi integriert, indem dieser mit seinem Profilrücken an einem elastischen Träger befestigt ist. Der Träger lässt eine Krümmung senkrecht zur Fahrzeugscheibe zu, sodass die Wischleiste der Kontur der Fahrzeugscheibe folgen kann. Die Wischleiste und der Träger bilden ein Bauteil, das während der Montage des Scheibenwischers am Fahrzeug hinzugefügt wird oder im Reparaturfall auszutauschen ist. Damit wird einerseits die Montage vereinfacht und andererseits der Zeitaufwand verringert.

Das erfindungsgemäße Verfahren ist nicht nur zum Reinigen von Fahrzeugscheiben, sondern auch zum Reinigen anderer Flächen geeignet, wie beispielsweise Folien.

### Zeichnung

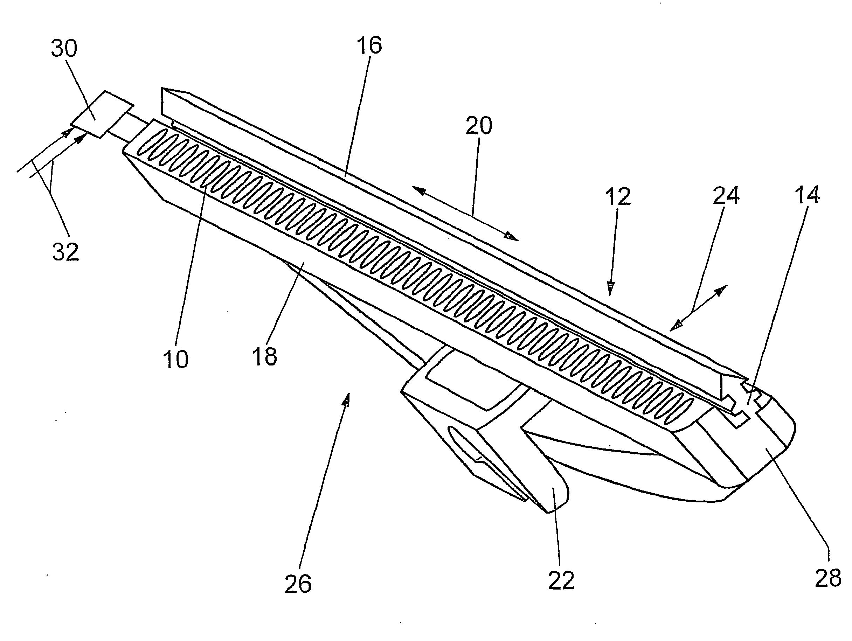

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Die einzige Zeichnung zeigt eine perspektivische Darstellung einer Wischleiste mit integrierten Piezoelementen.

### Beschreibung der Ausführungsbeispiele

Ein gelenkloses Wischblatt 26 besteht aus einem Träger 18 und einer Wischleiste 12. Der Träger 18 weist eine lang gestreckte Form auf und seine Enden sind senkrecht zur Wischrichtung 24 und zu einer nicht dargestellten Fahrzeugscheibe hin gekrümmt. In der Mitte besitzt der Träger 18 ein angeformtes Anschlussstück 22, in dem eine ebenfalls nicht dargestellte Wischstange direkt oder unter Zwischenschalten von Adapterstücken eingreift.

Die Wischleiste 12 besitzt einen Wischgummi 14, der im Bereich seines Profilrückens 28 mit dem Träger 18 fest verbunden ist, so dass er die gleiche Krümmung wie der Träger 18 aufweist. Der Wischgummi 14 ist ebenfalls lang gestreckt und besitzt im Anschluss an den Profilrücken 28 eine angeformte Wischlippe 16, welche in Längsrichtung 20 an der Fahrzeugscheibe anliegt.

Im Träger 18 sind neben dem Profilrücken 28 Piezoelemente 10 vorgesehen. Diese sind nebeneinander und parallel zur Wischleiste 12 angeordnet und wirken in Wischrichtung 24 auf den Wischgummi 14, so dass dieser während des Wischvorgangs und/oder kurz vorher in Wischrichtung 24 in hochfrequente Schwingungen versetzt wird. Dabei werden die Piezoelemente 10 über eine Steuereinheit 30 angesteuert, die gleichzeitig weitere Eingangssignale 32 verarbeitet und somit die Größe der hochfrequenten Schwingungen und die Einschaltzeiten einstellt.

### Bezugszeichen

- 10: Piezoelement
- 12: Wischleiste
- 14: Wischgummi
- 16: Wischlippe
- 18: Träger
- 20: Längsrichtung
- 22: Anschlussstück
- 24: Wischrichtung
- 26: Wischblatt
- 28: Profilrücken
- 30: Steuereinheit
- 32: Eingangssignal

## Patentansprüche

1. Verfahren zum Reinigen von Fahrzeugscheiben mittels eines Scheibenwischers mit einer Wischleiste (12), deren Wischlippe (16) an der Fahrzeugscheibe anliegt und die Wischleiste (12) während des Wischvorgangs durch Piezoelemente (10) quer zu ihrer Längsrichtung (20) in Schwingungen versetzt wird, **dadurch gekennzeichnet, dass** die Wischleiste (12) mit einem zeitlichen Vorlauf zur Wischbewegung in Schwingungen versetzt wird.

2. Verfahren nach Anspruch 1, **dadurch gekennzeichnet, dass** die Schwingungen eine Frequenz im Ultraschallbereich haben.

3. Vorrichtung zum Durchführen eines Verfahrens nach einem der vorhergehenden Ansprüche, wobei parallel zur Wischleiste (12) in einem Träger (18) neben einem Profilrücken (28) Piezoelemente (10) angeordnet sind, und von einer elektronischen Steuereinheit (30) angesteuert werden, **dadurch gekennzeichnet, daß** die Piezoelemente (10) auf einen Wischgummi (14) in Wischrichtung (24) wirken.

4. Vorrichtung nach Anspruch 3, **dadurch gekennzeichnet, dass** der Träger (18) senkrecht zur Fahrzeugscheibe nachgiebig ist.

5. Vorrichtung nach Anspruch 4, **dadurch gekennzeichnet, dass** der Träger (18) der Piezoelemente (10) an einem Profilrücken (28) des Wischgummis (14) angeformt ist.

6. Vorrichtung nach einem der Ansprüche 3 bis 5, **dadurch gekennzeichnet, dass** die Steuereinheit (30) beim ersten Betätigen des Scheibenwischers nach einem Stillstand des Fahrzeugs und/oder bei Außentemperaturen unter dem Gefrierpunkt die Piezoelemente (10) mit einem zeitlichen Vorlauf zur Wischbewegung aktiviert.

## Claims

1. Method for cleaning vehicle panes by means of a wiper with a wiper strip (12), the wiper lip (16) of which rests on the vehicle pane, and the wiper strip (12) is made to oscillate transversely with respect to its longitudinal extent (20) by means of piezo elements (10) during the wiping operation, **characterized in that** the wiper strip (12) is made to oscillate in advance of the wiping movement.

2. Method according to Claim 1, **characterized in that** the oscillations have a frequency in the ultrasonic range.

3. Device for carrying out a method according to one of the preceding claims, with piezo elements (10) being arranged parallel to the wiper strip (12) in a carrier (18) next to a profiled spine (28) and being activated by an electronic control unit (30), **characterized in that** the piezo elements (10) act in the wiping direction (24) on a wiper blade rubber (14).

4. Device according to Claim 3, **characterized in that** the carrier (18) is flexible perpendicular with respect to the vehicle pane.

5. Device according to Claim 4, **characterized in that** the carrier (18) of the piezo elements (10) is integrally formed on a profiled spine (28) of the wiper blade rubber (14).

6. Device according to one of Claims 3 to 5, **characterized in that**, in the case of the first actuation of the wiper after the vehicle has been at a standstill and/or at outside temperatures below freezing, the control unit (30) activates the piezo elements (10) in advance of the wiping movement.

## Revendications

1. Procédé de nettoyage de vitres de véhicules à l'aide d'un essuie-glace comportant un balai d'essuie-glace (12) dont la lèvre (16) est appliquée contre la vitre du véhicule et le balai (12) est mis en oscillations, transversalement à sa direction longitudinale (20) pendant l'essuyage, par des éléments piézo-électriques (10),
**caractérisé en ce qu'**
on met en oscillations le balai d'essuie-glace (12) en avance par rapport au mouvement d'essuyage.

2. Procédé selon la revendication 1,
**caractérisé en ce que**
les oscillations ont une fréquence dans le domaine des ultrasons.

3. Dispositif pour la mise en oeuvre d'un procédé selon l'une des revendications précédentes, comportant des éléments piézo-électriques installés parallèlement au balai d'essuie-glace (12) dans un support (18) à côté du dos profilé (28), et commandés par une unité de commande électronique (30),
**caractérisé en ce que**
les éléments piézo-électriques agissent sur la lame d'essuyage (14) dans la direction d'essuyage (24).

4. Dispositif selon la revendication 3,
**caractérisé en ce que**
le support (18) est souple perpendiculairement à la vitre du véhicule.

5. Dispositif selon la revendication 4,
**caractérisé en ce que**
le support (18) des éléments piézo-électriques (10) est formé sur le dos profilé (28) de la lame d'essuyage (24).

6. Dispositif selon l'une des revendications 3 à 5,
**caractérisé en ce qu'**
au premier actionnement de l'essuie-glace, après un arrêt du véhicule et/ou pour une température extérieure inférieure à la température de gelée, l'unité de commande (30) active l'élément piézo-électrique (10) en avance par rapport au mouvement d'essuyage.
